# FASCICULE DE BREVET EUROPEEN

(11) **EP 0 497 712 B1**
(45) Date de publication et mention de la délivrance du brevet: **20.03.1996**
(21) Numéro de dépôt: 92420016.5
(22) Date de dépôt: 13.01.1992
(51) Int. Cl.: C01B 7/01

(54) **Procédé de dépollution d'effluents gazeux riches en oxygene et contenant des dérives chlores**
Verfahren zur Reinigung von Chlorderivate enthaltenden sauerstoffreichen Abgasen
Process for pollution abatement relating to gaseous effluents having high oxygen content and containing chlorine derivatives

(30) Priorité: 14.01.1991 FR 9100765
(43) Date de publication de la demande: 05.08.1992
(73) Titulaire: LE CARBONE LORRAINE, F-92400 Courbevoie (FR)
(72) Inventeur: Roth, Patrick, F-57000 Metz (FR)
(74) Mandataire: Vanlaer, Marcel

(56) Documents cités:
- EP-A- 0 103 863
- FR-A- 2 525 202
- FR-A- 2 533 204
- GB-A- 624 974

## Description

### DOMAINE DE L'INVENTION

L'invention concerne un procédé de dépollution d'effluents gazeux riches en oxygène et contenant des dérivés chlorés, typiquement du chlore, par production d'acide chlorhydrique de concentration commerciale.

### ART ANTERIEUR

On connaît un procédé pour assurer une production d'acide chlorhydrique (HCl) ou éliminer des effluents gazeux contenant du chlore qui consiste à brûler le chlore en présence d'hydrogène de manière à obtenir, après captage de l'acide chlorhydrique formé, des gaz inertes qui peuvent être envoyés dans l'atmosphère.
La combustion du chlore et de l'hydrogène est mise en oeuvre dans des dispositifs appelés "unités de synthèse d'acide chlorhydrique" qui schématiquement comprennent une chambre de combustion avec un brûleur pour le mélange et la combustion des gaz, une ou plusieurs chambres d'absorption des gaz de combustion par de l'eau ou de l'eau contenant de l'acide chlorhydrique, et des échangeurs de chaleur, distincts ou non des chambres d'absorption. Des unités de synthèse d'acide chlorhydrique sont décrites dans les brevets français 2 525 202, 2 533 204, 2 592 870 au nom de la demanderesse.

Ainsi, un effluent gazeux contenant du chlore et des gaz inertes, typiquement de l'azote, peut être traité dans une unité de synthèse de HCl classique.

### PROBLEME POSE

Dans le cas d'effluents riches en oxygène et en dérivés chlorés, la dépollution des effluents pose un problème tout à fait différent.
En effet, d'une part, la température de flamme lors de la combustion des effluents s'élève avec la teneur en O₂, de sorte que, dans le cas de mélanges riches en O₂, typiquement des teneurs supérieures à 20% en volume, la température de flamme peut dépasser les 3000-3300°C, alors que la température de flamme dans le cas de la combustion de chlore ou d'effluents contenant du chlore et peu ou pas d'oxygène se situe au-dessous de 3000°C.
D'autre part, les unités de synthèse de HCl sont équipées de brûleurs adaptés à la combustion du chlore supportant une température de flamme limitée dépendant des matériaux et de la conception du brûleur. Par ailleurs, il n'est pas facile de changer le brûleur des installations existantes, ni de trouver des matériaux qui résistent à l'attaque corrosive de Cl₂ et de HCl à haute température, convenant à la fois pour les deux types d'application que sont la synthèse de HCl à partir de gaz riche en chlore et la synthèse de HCl à partir d'effluents gazeux contenant O₂ et Cl₂ ou des produits générateurs de Cl₂.

La dépollution d'effluents gazeux riches en oxygène et en dérivés chlorés n'est donc pas facile à réaliser de manière économique dans la mesure où à la fois les fabricants d'équipements et les industriels utilisateurs souhaitent disposer d'une installation mixte qui puisse d'une part assurer une production de HCl à partir de gaz riche en Cl₂ et qui, d'autre part, puisse assurer une production de HCl et éliminer des effluents gazeux, même ceux riches simultanément en oxygène et en dérivés chlorés, et ceci, avec une grande flexibilité des débits à traiter.

On a pensé à diluer l'effluent gazeux à traiter avec de l'air, mais la quantité d'air à introduire est très importante pour abaisser significativement la température de flamme, d'autant que l'oxygène de l'air introduit brûle aussi et consomme de l'hydrogène et que la chaleur de combustion supplémentaire doit être éliminée, ce qui surdimensionne les équipements en aval. En conséquence, cette solution a été écartée à la fois pour des raisons techniques et économiques.
Quant'à la solution consistant à diluer par de l'azote industriel, elle est techniquement possible mais trop coûteuse pour être utilisable industriellement.

### OBJET DE L'INVENTION

L'invention a pour objet un procédé économique de production de HCl et de dépollution d'effluents gazeux riches simultanément en oxygène et en chlore et dérivés chlorés.
Un autre objet de l'invention est l'utilisation, pour mettre en oeuvre le procédé selon l'invention, d'unités de synthèse d'HCl standard, moyennant un aménagement peu coûteux.

### DESCRIPTION DE L'INVENTION

Le procédé selon l'invention est un procédé de dépollution et de production de HCl à partir d'effluents gazeux riches à la fois en dérivés chlorés et en oxygène comprenant en volume typiquement plus de 10 % de chlore, plus de 20% d'oxygène et le complément de gaz inerte, par brûlage à l'hydrogène des gaz comburants (O₂,Cl₂) de l'effluent gazeux et absorption de HCl formé, caractérisé en ce qu'on brûle, dans le four d'une unité de synthèse de HCl qui comprend en outre classiquement comme éléments essentiels un échangeur de chaleur, un absorbeur de HCl et une colonne de queue munie d'un évent, un mélange gazeux comprenant a) l'effluent gazeux à traiter, b) de l'hydrogène en quantité suffisante pour que soient brûlés tout l'oxygène et tout le chlore présents dans l'effluent gazeux, c) un gaz inerte de recyclage en proportion suffisante par rapport aux gaz comburants (O₂,Cl₂) dudit effluent gazeux de manière à maintenir la température de flamme du brûleur dudit four au-dessous d'une température compatible avec la tenue thermique du matériau du brûleur, ledit gaz inerte de recyclage étant prélevé par piquage total ou partiel du flux gazeux de sortie de ladite colonne de queue et étant réintroduit en tête dudit four, à l'aide de moyens de mise en circulation et de régulation du flux dudit gaz inerte de recyclage, de manière à former dans l'unité de synthèse une boucle de flux gazeux inerte en circulation permanente.

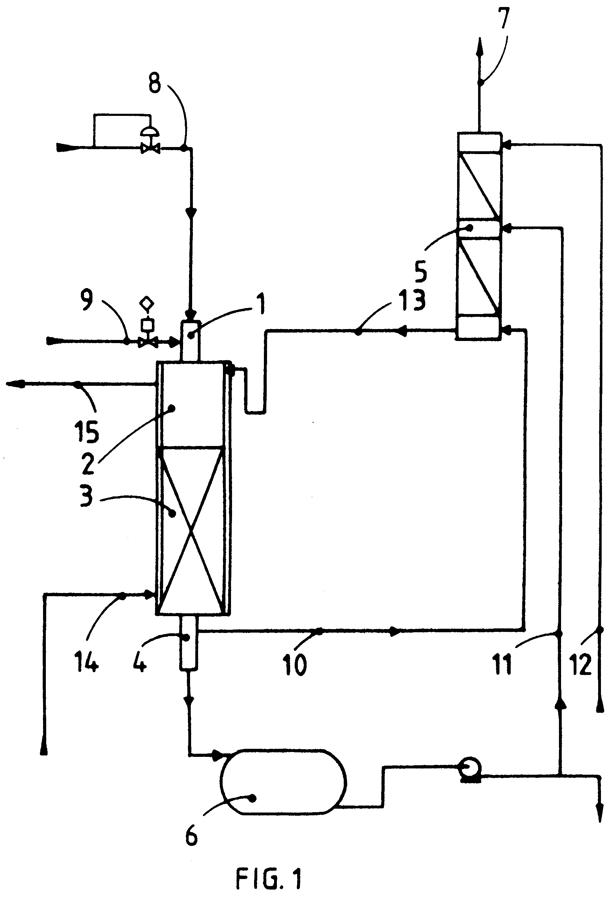

L'invention sera mieux comprise en considérant tout d'abord le schéma de principe d'une unité de synthèse de HCl, tel que représenté à la figure 1 :
Un brûleur (1) est alimenté en gaz comburant (Cl₂) (8) et en gaz carburant (H₂) (9). Ce brûleur est un élément d'un four de combustion (2), prolongé par un absorbeur de HCl (3), le four (2) et l'absorbeur (3) étant alimentés en eau acidulée (13) destinée à absorber HCl gazeux formé par la combustion de Cl₂ et de H₂ et étant refroidis extérieurement par une circulation d'eau froide (14,15).
Du séparateur gaz/liquide (4) s'échappent un flux gazeux (10), riche en gaz inertes et chargé en vapeurs de HCl, dirigé vers la colonne de queue (5), et un flux liquide dirigé vers un stockage (6) de la solution aqueuse d'acide chlorhydrique concentré.
Le flux gazeux (10) est débarrassé des restes de vapeur de HCl dans la colonne de queue (5) par lavage à l'eau (12) et éventuellement par lavage avec la solution aqueuse d'acide chlorhydrique concentré (11). Du bas de la colonne de queue (5), le flux liquide constitué d'une solution aqueuse diluée (13) est dirigé en tête du four (2) pour absorber HCl formé.
Un flux gazeux de gaz inertes s'échappe par l'évent (7) en communication avec l'atmosphère.

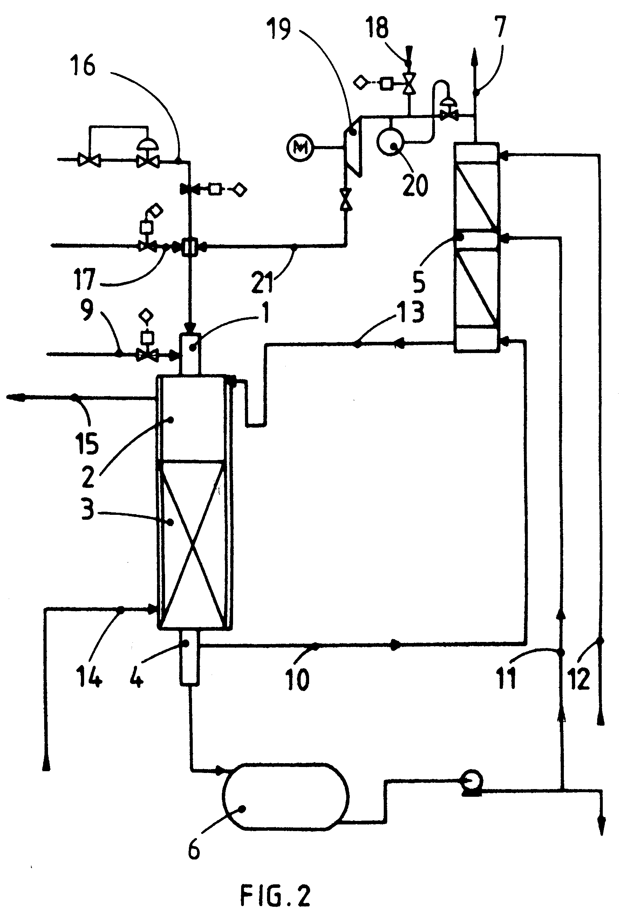

Selon l'invention, cette unité de synthèse de HCl a été modifiée comme schématisé à la figure 2 qui représente un exemple de mise en oeuvre de l'invention :
- à l'entrée du brûleur (1) arrivent l'effluent gazeux à dépolluer (16) sous pression et le flux de gaz inerte de recyclage (21) issu d'un piquage en sortie de la colonne de queue (5). L'arrivée (17) est une arrivée d'azote sous pression qui est seulement nécessaire en phase de démarrage du traitement de dépollution, comme cela sera expliqué ensuite.
- le gaz inerte de recyclage (21) est mis en circulation et son flux (débit horaire m³/h) est contrôlé à l'aide de tous moyens connus (un ventilateur centrifuge (19) convient dans ce but), entre le piquage en sortie de colonne de queue (5) et l'entrée du brûleur (1). En amont du ventilateur (19) se trouvent en outre une régulation de pression (20) et une arrivée d'air (18) qui est utilisée en phase de démarrage.

Sur la figure 2 ne sont pas schématisés les moyens de contrôle et de régulation pour le pilotage automatique de l'installation, moyens constitués par des capteurs mesurant des débits de flux gazeux, capteurs et/ou détecteurs pour établir la composition des effluents d'entrée (16), pour détecter la présence éventuelle de chlore dans le flux gazeux de gaz inerte s'échappant par l'évent (7) vers l'atmosphère.
La composition des effluents d'entrée n'a pas à être nécessairement déterminée en continu et en temps réel dans la mesure où elle est relativement constante.
Les éléments principaux de pilotage du procédé sont les suivants :
- d'une part, l'hydrogène doit être en léger excès par rapport à la stoechiométrie des gaz comburants de manière à ce que tout l'oxygène et que tout le chlore soient effectivement brûlés. On peut noter que, la combustion de l'oxygène étant plus facile et plus complète que celle du chlore, la détection de traces de chlore au niveau de l'évent (7) signifie que le débit d'hydrogène se situe à très légérement au-dessous du niveau minimum admissible.
- d'autre part, il importe d'avoir une température de flamme dans le brûleur qui soit inférieure à une température compatible avec la tenue thermique du matériau du brûleur, sous peine d'endommager et de limiter la durée de vie du brûleur et pour cela, il convient de "diluer" suffisamment les effluents gazeux (16) à dépolluer par le flux de gaz inerte de recyclage (21). La proportion de ces deux flux, qui est fonction de la composition de l'effluent gazeux à dépolluer (pourçentage relatif d'oxygène, de chlore et de gaz inerte) est déterminée par calcul de thermique classique.
Cette température de flamme, compatible avec la tenue thermique du brûleur, est généralement voisine de 3000°C

De préférence, l'installation est pilotée par ordinateur ayant en mémoire ou calculant la proportion requise pour les deux flux gazeux (effluents gazeux à dépolluer et flux de gaz inerte de recyclage) en fonction des compositions possibles en O₂/Cl₂/gaz inerte des effluents gazeux à dépolluer, de manière à maintenir la température de flamme du brûleur au-dessous d'une valeur de consigne prédéterminée.

Il est important de noter que la capacité de refroidisement du gaz inerte de recyclage est, selon le procédé de l'invention, directement liée au débit de gaz inerte circulant au moyen d'un ventilateur dans la boucle. Le procédé permet donc des variations relativement importantes de débit en effluents gazeux à dépolluer, de 1 à 8 environ en valeur relative, sans qu'il y ait donc à modifier l'installation elle-même et sans perturber l'hydrodynamique de la flamme.

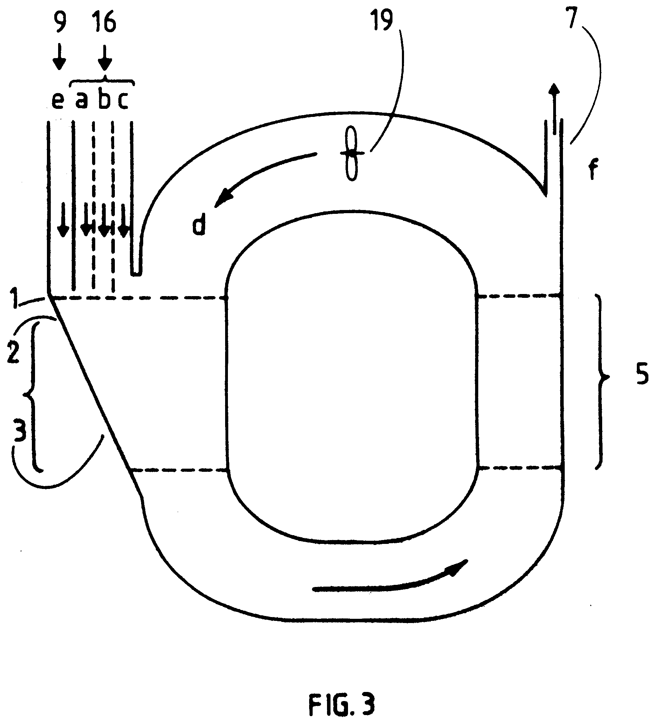

En ce qui concerne les différents flux gazeux circulant dans tout ou partie de l'installation selon l'invention, ils ont été représentés sur la figure 3 qui schématise le "coeur" du procédé selon l'invention, chacun des flux gazeux, exprimable en m³/h, étant désigné par une lettre (de a à f) :
- le procédé est basé sur la circulation en boucle d'une masse gazeuse inerte.
- en amont du brûleur (1), il y a mélange :
   * du flux de gaz inerte de recyclage (d)
   * de l'effluent gazeux à traiter comprenant typiquement O₂ (a), Cl₂ (b), gaz inerte (c)
   * de l'hydrogène (e)
- il y a combustion au niveau du brûleur (1) .
- à la sortie de l'absorbeur (3), la masse gazeuse n'est en général constituée que de la masse gazeuse inerte de départ augmentée de la fraction de gaz inerte (c) contenue dans l'effluent gazeux à traiter.
- comme il ne peut y avoir accumulation, un flux de gaz inerte (f), égal au flux de gaz inerte (c) introduit, est rejeté à l'atmosphère par l'évent (7).

La figure 3 traduit, bien qu'elle soit schématique, l'importance relative du flux (c + d) de gaz inerte par rapport au flux de gaz comburant (a + b).
Typiquement, pour une teneur en oxygène dans l'effluent gazeux qui se situe vers 50% en volume et une teneur en chlore voisine de 25 % en volume, le rapport "flux de gaz inerte"/"flux de gaz comburant", soit "c + d / a + b", est au moins égal à 0,8 et plus généralement ce rapport est caractéristique des compositions des effluents.
Ce rapport, qui augmente avec la teneur en oxygène, est déterminé par un calcul de thermique prenant en compte l'énergie calorifique dégagée par la combustion d'un mélange de gaz comburants en fonction de la composition de l'effluent gazeux.

Lors du démarrage du procédé de dépollution d'effluents gazeux (16), on procède comme suit :
- on purge toute l'installation avec de l'azote (9) et on fait fonctionner le ventilateur centrifuge (19) dans les conditions de vitesse de fonctionnement prévues compte tenu du débit et de la composition des effluents gazeux à traiter de manière à faire circuler en boucle du gaz inerte dans le "circuit gaz" de l'installation, essentiellement dans le four, l'absorbeur et la colonne de queue.
- on met en route le brûleur en l'alimentant simultanément en air (18) et en hydrogène (9) de manière à avoir un très léger excès d'hydrogène. Lors de cette phase, l'ensemble de l'installation (sauf l'arrivée d'effluent 16) fonctionne et atteint sensiblement sa température de palier en fonctionnement, le brûleur en particulier.
- on introduit progressivement l'effluent gazeux (16) tout en interrompant progressivement l'entrée d'air (18) dans le circuit gazeux.
Lorsque l'entrée d'air (18) est arrêtée, l'installation fonctionne en régime stable comme installation de dépollution d'effluent gazeux riche en oxygène et en chlore et assure une production de HCl.

Pour arrêter l'installation, il suffit d'interrompre simultanément l'arrivée d'effluent gazeux (16), l'arrivée d'hydrogène (9), puis la circulation du flux de gaz inerte.

Il est à noter que l'unité de synthèse de HCl ainsi modifiée pour dépolluer des effluents gazeux pauvres en Cl₂ et riches en O₂ peut ensuite, sans modifications, être utilisée pour la synthèse de HCl à partir de Cl₂ ou de gaz riches en Cl₂.

De préférence, on utilise une unité de synthèse de HCl, de type semi-intégrée ou de type intégré, comme représenté respectivement aux figure 1 et 2 du FR 2 533 204, l'unité de type semi-intégré regroupant en un seul élément assemblé le four et l'absorbeur avec échangeur de chaleur, alors que l'unité de type intégré regroupe en un seul élément assemblé le four, l'absorbeur avec échangeur de chaleur et la colonne de queue.

### EXEMPLES

### Exemple 1

L'unité de synthèse de HCl ayant servi aux essais est une unité commercialisée par la société Le Carbone Lorraine (type USL 16 blocs 818 en GRAPHILOR BS (R)).
Le brûleur est en quartz et brûle un gaz riche en chlore de composition suivante (en volume) :
Cl₂ = 82%, O₂ = 13%, H₂ = 2%, N₂ = 1%, CO₂ = 2%,
ce qui correspond à une température de flamme de 3000°C environ.
Les flux gazeux sont les suivants :
- flux d'effluents gazeux (a + b + c) = 1166 Nm³/h
- flux d'hydrogène (e) = 1308 Nm³/h
- flux de gaz inerte sortant (f) = 162 Nm³/h
   (dans cette demande, Nm³ désigne le m³ dans les conditions standard de température et de pression).

On a modifié cette unité selon le schéma de la figure 2 en reliant la sortie de colonne de queue (5) et l'entrée du brûleur (1) grâce à une canalisation (21) équipée d'un ventilateur (19) (ventilateur en polypropylène d'une puissance absorbée de 1 kW), munie d'une régulation de pression (20) et d'une arrivée d'air (18) en amont du ventilateur (19).

On a alimenté cette unité ainsi modifié en effluent gazeux à dépolluer ayant code composition :
Cl₂ = 26%, O₂ = 54%, H₂ = 6%, N₂ = 7%, CO₂ = 7%

Les calculs de thermique ont montré que pour cette composition, le rapport "flux de gaz inerte total/ flux de gaz comburants", soit (c + d)/(a + b), doit être supérieur à 0,92 pour avoir une température de flamme inférieure à 3000°C.

En fonctionnement, les flux des divers gaz entrant/sortant de l'unité modifiée sont les suivants :
* flux d'effluent gazeux (a+b+c) : 228 Nm³/h
* flux d'hydrogène (e) : 295 Nm³/h
* flux de gaz inerte de recyclage (d) : 147 Nm³/h
* flux de gaz inerte sortant (f) : 43 Nm³/h
ce qui correspond à un rapport (c + d)/(a + b) voisin de 0,98.

### Exemple 2

On a alimenté une unité de synthèse telle que modifiée à l'exemple 1 avec un effluent gazeux ayant la composition suivante :
Cl₂ = 70%, O₂ = 20%, N₂ = 10%,
le flux de gaz inerte a été fixé de manière à avoir un rapport (c + d)/(a + b) de 0,24, ce qui a permis d'assurer une température de flamme du brûleur inférieure à 3000°C.

### Exemple 3

On a alimenté une unité de synthèse telle que modifiée à l'exemple 1 avec un effluent gazeux ayant la composition suivante :
Cl₂ = 10%, O₂ = 60%, N₂ = 30%,
le flux de gaz inerte a été fixé de manière à avoir un rapport (c + d)/(a + b) de 1,75, ce qui a permis d'assurer une température de flamme du brûleur inférieure à 3000°C.

### AVANTAGES DE L'INVENTION

L' invention est une solution techniquement et économiquement intéressante au problème de la dépollution des effluents gazeux chlorés riches en oxygène puisque fondamentalement le problème de la dépollution est résolu avec une unité "standard" de synthèse de HCl, moyennant des modifications peu coûteuses.

Par ailleurs, ces unités de synthèse HCl sont connues pour leur compacité et leur productivité.
Ainsi, il est avantageux de pouvoir utiliser un même équipement de base performant pour deux usages différents, et avec même la possibilité, en utilisant une unité de synthèse de HCl modifiée selon l'invention, de pouvoir alterner ces deux usages différents (synthèse HCl / dépollution) sans avoir à changer un élément de l'installation, et donc sans coûts particuliers.
Le procédé selon l'invention est aussi particulièrement économique en matière, notamment en gaz inerte, puisque l'azote est utilisé seulement en phase de démarrage.
Le procédé selon l'invention trouve une application dans la dépollution des effluents gazeux chlorés et oxygénés, quelle que soit la proportion relative en produits chlorés et en oxygène.

## Revendications

1. Procédé de dépollution d'effluents gazeux riches à la fois en dérivés chlorés et en oxygène comprenant en volume typiquement plus de 10 % de chlore, plus de 20% d'oxygène et le complément de gaz inerte, par brûlage à l'hydrogène des gaz comburants (O2, Cl2) de l'effluent gazeux et absorption de HCl formé, caractérisé en ce qu'on brûle à l'aide d'un brûleur (1), dans le four (2) d'une unité de synthèse de HCl qui comprend en outre classiquement comme éléments essentiels un échangeur de chaleur, un absorbeur (3) de HCl et une colonne de queue (5) munie d'un évent (7), un mélange gazeux comprenant a) l'effluent gazeux à traiter, b) de l'hydrogène en quantité suffisante pour que soient brûlés tout l'oxygène et tout le chlore présents dans l'effluent gazeux, c) un gaz inerte de recyclage en proportion suffisante par rapport aux gaz comburants (O2, Cl2) dudit effluent gazeux de manière à maintenir la température de flamme dudit brûleur (1) au-dessous d'une température compatible avec la tenue thermique du matériau du brûleur, ledit gaz inerte de recyclage étant prélevé par piquage total ou partiel du flux gazeux de sortie de ladite colonne de queue (5) et étant réintroduit à l'entrée dudit brûleur (1), à l'aide de moyens de mise en circulation et de régulation du flux dudit gaz inerte de recyclage, de manière à former dans l'unité de synthèse une circulation de flux gazeux inerte formant une boucle, le flux gazeux inerte, réchauffé dans le four (2), étant ensuite refroidi dans le reste de ladite boucle.

2. Procédé selon la revendication 1 dans lequel ledit brûleur est en matériau choisi parmi le quartz, la silice, le graphite et tout métal compatible avec la combustion du chlore et de dérivés chlorés, de manière à pouvoir être utilisé pour la synthèse de HCl et pour la dépollution d'effluents gazeux chlorés riches en oxygène.

3. Procédé selon une quelconque des revendications 1 et 2 dans lequel ladite proportion suffisante de gaz inerte de recyclage par rapport aux gaz comburants (chlore et oxygène) de l'effluent gazeux, permettant d'avoir une température de flamme inférieure à ladite température de flamme compatible avec la tenue thermique du matériau du brûleur, est déterminée a priori par calcul de bilan thermique en fonction de la composition de l'effluent gazeux à traiter.

4. Procédé selon une quelconque des revendications 1 à 3 dans lequel ledit gaz inerte en circulation est de débit adaptable au débit et à la composition dudit effluent gazeux à traiter.

5. Procédé selon la revendication 4 dans lequel l'adaptation du débit dudit gaz inerte froid est obtenu au moyen d'un ventilateur qui peut être à vitesse de rotation variable et équipé d'une régulation de débit.

6. Procédé selon une quelconque des revendications 1 à 5 dans lequel ladite unité de synthèse de HCl comprend un four et un absorbeur en graphite intégrés, équipés de moyens de refroidissement par circulation d'eau.

7. Procédé selon une quelconque des revendications 1 à 6 dans lequel ladite température de flamme compatible avec la tenue thermique du matériau du brûleur est voisine de 3000°C.

8. Procédé selon une quelconque des revendications 1 à 7 qui comporte, dans sa phase de démarrage, la mise en circulation d'un flux de gaz inerte à base d'azote, la mise en route du brûleur par combustion d'air et d'hydrogène , puis la substitution de l'air par l'effluent gazeux à dépolluer.

9. Procédé selon une quelconque des revendications 7 à 8 dans lequel le rapport "flux de gaz inerte total"/"flux de gaz comburants, dont O₂ et Cl₂", également désigné par "(c + d)/(a + b)" dans la description, est supérieur à 0,92 pour un effluent gazeux à teneur en oxygène voisine de 50% en volume et est supérieur à 0,2 pour un effluent gazeux à teneur en oxygène voisine de 20% en volume.

10. Unité de synthèse de HCl et de dépollution d'effluents gazeux chlorés riches en oxygène constitués en volume typiquement de plus de 10 % de chlore, de plus de 20% d'oxygène et du complément en gaz inerte, comprenant un four (2) refroidi équipé d'un brûleur (1) pour réaliser la combustion, avec de l'hydrogène (9), des gaz comburants (O2, Cl2) de l'effluent gazeux (16), un absorbeur échangeur de chaleur (3) pour absorber HCl formé, une colonne de queue (5) munie d'un évent (7), caractérisée en ce qu'elle comprend des moyens pour faire circuler, avec un débit variable et contrôlé, un flux de gaz inerte (21) entre la sortie de la colonne de queue (5) et l'entrée du brûleur (1), par piquage de tout ou partie du flux gazeux inerte froid sortant de la colonne de queue (5) et injection en amont du brûleur, le débit variable dudit flux de gaz inerte (21) de recyclage étant choisi de manière à ce que la température de flamme dans le four (2) conduise à une température de brûleur compatible avec la résitance thermique du matériau dudit brûleur.

11. Unité de synthèse de HCl et de dépollution selon la revendication 10 dans laquelle le four (2) et l'absorbeur échangeur de chaleur (3) sont regroupés en un seul appareillage, de manière à former une unité de synthèse HCl semi-intégrée.

12. Unité de synthèse de HCl et de dépollution selon la revendication 10 dans laquelle le four (2), l'absorbeur échangeur de chaleur (3) et la colonne de queue (5) sont regroupés en un seul appareillage, de manière à former une unité de synthèse HCl intégrée.

13. Unité de synthèse de HCl et de dépollution selon une quelconque des revendications 10 à 12 dans laquelle lesdits moyens pour faire circuler un flux de gaz inerte (21) de recyclage est un ventilateur à vitesse variable.

14. Unité de synthèse de HCl et de dépollution selon une quelconque des revendications 10 à 13 dans laquelle le flux de gaz inerte (21) de recyclage est asservi à la composition et au débit de l'effluent gazeux à dépolluer de manière à maintenir la température de flamme du brûleur au-dessous d'une température de consigne qui est fonction de la nature du matériau constituant le brûleur.

15. Unité de synthèse de HCl et de dépollution selon la revendication 14 dans laquelle l'asservissement du flux de gaz inerte (21) à la composition et au débit flux, de même que la conduite de l'unité est réalisée automatiquement, à l'aide d'un ordinateur ayant en mémoire ou pouvant calculer le flux de gaz inerte adapté à un débit et une composition quelconques d'un effluent gazeux contenant du chlore et de l'oxygène, de manière à maintenir la température de flamme du brûleur au-dessous d'une valeur de consigne prédéterminée.

## Claims

1. Process for the pollution control of gaseous effluents rich both in chlorinated derivatives and oxygen and typically comprising, by volume, more than 10% of chlorine, more than 20% of oxygen and the complement of inert gas, by burning the combustive gases (O₂,Cl₂) of the gaseous effluent in hydrogen and absorption of HCl formed, characterised in that, by means of a burner (1), there is burned in the furnace (2) of an HCl synthesis unit also conventionally comprising as essential elements a heat exchanger, an HCl absorber (3) and a tail column (5) equipped with a vent (7), a gaseous mixture comprising a) the gaseous effluent to be treated, b) a sufficient quantity of hydrogen for all the oxygen and all the chlorine present in the gaseous effluent to be burned, c) an inert recycling gas in a sufficient proportion relative to the combustive gases (O₂,Cl₂) of said gaseous effluent so as to keep the flame temperature of said burner (1) below a temperature which is compatible with the thermal resistance of the material of the burner, said inert recycling gas being removed by total or partial tapping of the gaseous flow leaving said tail column (5) and being reintroduced at the inlet of said burner (1) using means for circulating and regulating the flow of said inert recycling gas so as to form in the synthesis unit a circulation of inert gaseous flow forming a loop, the inert gaseous flow which is reheated in the furnace (2) then being cooled in the remainder of said loop.

2. Process according to claim 1, in which said burner is of a material selected from quartz, silica, graphite and any metal which is compatible with the combustion of the chlorine and of chlorinated derivatives so that it can be used for the synthesis of HCl and for the pollution control of chlorinated gaseous effluents which are rich in oxygen.

3. Process according to any one of claims 1 and 2, in which said sufficient proportion of inert recycling gas relative to the combustive gases (chlorine and oxygen) of the gaseous effluent allowing a flame temperature lower than said flame temperature which is compatible with the heat resistance of the material of the burner is determined beforehand by calculation of the thermal balance as a function of the composition of the gaseous effluent to be treated.

4. Process according to any one of claims 1 to 3 in which said inert gas in circulation has a flow rate which can be adapted to the flow rate and the composition of said gaseous effluent to be treated.

5. Process according to claim 4, in which the flow rate of said cold inert gas is adapted by means of a fan which can have a variable speed of rotation and is equipped with a flow rate regulator.

6. Process according to any one of claims 1 to 5, in which said HCl synthesis unit comprises a furnace and a graphite absorber which are integrated and are equipped with means for cooling by circulation of water.

7. Process according to any one of claims 1 to 6, in which said flame temperature which is compatible with the heat resistance of the material of the burner is close to 3000°C.

8. Process according to any one of claims 1 to 7 which comprises, in its start-up phase, the circulation of a flow of inert gas based on nitrogen, the start-up of the burner by combustion of air and hydrogen, then the substitution of the gaseous effluent to be depolluted for the air.

9. Process according to any one of claims 7 to 8 in which the ratio of "flow of total inert gas"/"flow of combustive gases, that is O₂ and Cl₂" also designated by "(c + d)/(a + b)" in the description, is higher than 0.92 for a gaseous effluent having an oxygen content close to 50% by volume and is higher than 0.2 for a gaseous effluent having an oxygen content close to 20% by volume.

10. Unit for the synthesis of HCl and for pollution control of chlorinated gaseous effluents which are rich in oxygen and typically consist, by volume, of more than 10% of chlorine, more than 20% of oxygen and of the complement of inert gas, comprising a cooled furnace (2) equipped with a burner (1) for carrying out combustion, with hydrogen (9), combustive gases (O₂, Cl₂) of the gaseous effluent (16), a heat exchanger absorber (3) to absorb HCl formed, a tail column (5) equipped with a vent (7), characterised in that it comprises means for circulating, at a variable and controlled flow rate, a flow of inert gas (21) between the outlet of the tail column (5) and the inlet of the burner (1) by tapping all or part of the cold inert gaseous flow issuing from the tail column (5) and injection upstream of the burner, the variable flow rate of said flow of inert recycling gas (21) being selected such that the flame temperature in the furnace (2) leads to a burner temperature which is compatible with the heat resistance of the material of said burner.

11. Unit for the synthesis of HCl and for pollution control according to claim 10, in which the furnace (2) and the heat exchanger absorber (3) are combined in a single apparatus so as to form a semi-integrated HCl synthesis unit.

12. Unit for the synthesis of HCl and for pollution control according to claim 10, in which the furnace (2), the heat exchanger absorber (3) and the tail column (5) are combined in a single apparatus so as to form an integrated HCl synthesis unit.

13. Unit for the synthesis of HCl and for pollution control according to any one of claims 10 to 12 in which said means for circulating a flow of inert recycling gas (21) is a variable speed fan.

14. Unit for the synthesis of HCl and for pollution control according to any one of claims 10 to 13 in which the flow of inert recycling gas (21) is dependent on the composition and the flow rate of the gaseous effluent to be depolluted so as to keep the flame temperature of the burner below a reference temperature which is dependent on the nature of the material constituting the burner.

15. Unit for the synthesis of HCl and for pollution control according to claim 14 in which the dependency of the flow of inert gas (21) on the composition and flow rate, as well as the control of the unit is carried out automatically using a computer which has stored or can calculate the flow of inert gas adapted to any flow rate and composition of a gaseous effluent containing chlorine and oxygen so as to keep the flame temperature of the burner below a predetermined reference value.

## Patentansprüche

1. Verfahren zur Reinigung von Abgasen, die gleichzeitig einen hohen Gehalt an Chlorverbindungen und an Sauerstoff mit einem typischen Gehalt von größer 10 Vol.-% Chlor, größer 20 Vol.-% Sauerstoff und als Rest Inertgase aufweisen, durch Verbrennen von Brenngasen (O₂, Cl₂) des Abgases mit Wasserstoff und Absorption des gebildeten HCl, dadurch gekennzeichnet, daß man mit einem Brenner (1) im Ofen (2) einer HCl-Syntheseeinheit, die unter anderem in klassischer Anordnung als wesentliche Elemente einen Wärmeaustauscher, einen HCl-Absorber (3) und eine mit einem Luftaustritt (7) versehene Endkolonne (5) aufweist, eine Gasmischung enthaltend a) das zu behandelnde Abgas, b) Wasserstoff in einer zur Verbrennung des im Abgas vorhandenen gesamten Chlors und gesamten Sauerstoffs ausreichenden Menge, c) ein inertes Recyclegas in einem bezüglich der Brenngase (O₂, Cl₂) der Abgase ausreichenden Anteil zu verbrennen, so daß die Temperatur der Flamme des Brenners (1) unterhalb einer Temperatur gehalten wird, die mit dem thermischen Verhalten des Brennermaterials vereinbar ist, wobei das inerte Recyclegas durch Total- oder Teilentnahme aus dem Gasstrom des Auslasses der Endkolonne (5) stammt und zur Einlaßöffnung des Brenners (1) mit Hilfe von Mitteln, die den Fluß dieses Inertgases in Umlauf halten und regeln, so wiedereingeführt wird, daß in der Syntheseeinheit eine Zirkulation permanente Umlaufschleife eines inerten Gasflußes entsteht, die eine Umlaufschleife bildet und wobei der im Ofen (2) erwärmte Strom des inerten Gases im Rest dieser Umlaufschleife anschließend abgekühlt wird.

2. Verfahren nach Anspruch 1, wobei der Brenner aus einem Material gefertigt ist, das unter Quarz, Siliciumdioxid, Graphit und sämtlichen Metallen ausgewählt ist, die mit den Bedingungen bei der Verbrennung von Chlor oder chlorhaltigen Verbindungen kompatibel sind, so daß sie für die Herstellung von HCl und die Reinigung von Abgasen, die reich an Chlor und Sauerstoff sind, benutzt werden können.

3. Verfahren nach einem der Ansprüche 1 und 2, wobei der ausreichende Anteil an inertem Recyclegas bezüglich der Brenngase (Chlor und Sauerstoff) der Abgase, durch den es möglich wird, daß die Temperatur der Flamme unterhalb der Flammentemperatur liegt, die mit dem thermischen Verhalten des Brennermaterials vereinbar ist, vorab durch Berechnen der thermodynamischen Bilanz als Funktion der Zusammensetzung des zu behandelnden Abgases bestimmt wird.

4. Verfahren nach einem der Ansprüche 1 bis 3, wobei das in Umlauf befindliche inerte Gas einen Durchsatz aufweist, der an den Durchsatz und die Zusammensetzung des zu behandelnden Abgases angepaßt werden kann.

5. Verfahren nach Anspruch 4, wobei das Anpassen des Durchsatzes des kalten inerten Gases mit einem Gebläse geschieht, das eine variable Rotationsgeschwindigkeit aufweist und mit einer Durchsatzregeleinrichtung versehen ist.

6. Verfahren nach einem der Ansprüche 1 bis 5, wobei die HCl-Syntheseeinheit einen integrierten Ofen und einen Graphitabsorber aufweist, die mit Kühleinrichtungen versehen sind, die mit Wasserumlauf arbeiten.

7. Verfahren nach einem der Ansprüche 1 bis 6, wobei die Temperatur der Flamme, die mit dem thermischen Verhalten des Brennermaterials vereinbar ist, nahe 3000 °C liegt.

8. Verfahren nach einem der Ansprüche 1 bis 7, das in der Phase der Inbetriebnahme folgende Schritte umfaßt: ein Strom eines inerten Gases auf Stickstoffbasis wird in Umlauf gebracht; der Brenner wird durch Verbrennen von Luft und Wasserstoff angeworfen; anschließend wird die Luft durch das zu reinigende Abgas ersetzt.

9. Verfahren nach einem der Ansprüche 7 bis 8, wobei das Verhältnis "Gesamtstrom der inerten Gase/Strom der Brenngase, darunter O₂ und Cl₂", in der Beschreibung ebenfalls bezeichnet als (c + d)/(a + b), für ein Abgas, dessen Gehalt an Sauerstoff nahe 50 Vol.-% liegt, größer als 0,92 und für ein Abgas, dessen Gehalt an Sauerstoff nahe 20 Vol.-% liegt, größer als 0,2 ist.

10. Syntheseeinheit zur Synthese von HCl und zur Reinigung von chlorhaltigen Abgasen, die reich an Sauerstoff sind und typischerweise einen Gehalt von größer 10 Vol.-% Chlor, größer 20 Vol.-% Sauerstoff und als Rest inerte Gase aufweisen, umfassend einen gekühlten Ofen (2), der mit einem Brenner (1) zur Durchführung der Verbrennung der in den Abgasen (16) enthaltenen Brenngase (O₂, Cl₂) mit Wasserstoff (9) versehen ist, einen Absorber mit Wärmeaustauscher (3) zur Absorption von gebildetem HCl, eine mit einem Luftaustritt (7) versehene Endkolonne (5), dadurch gekennzeichnet, daß die Syntheseeinheit Mittel enthält, um mit einem variablen und kontrollierten Durchsatz einen Strom eines inerten Gases (21) durch Total- oder Teilentnahme eines kalten, aus der Endkolonne austretenden Stroms inerten Gases und Einspritzen stromauf vom Brenner zwischen dem Auslaß der Endkolonne (5) und der Zuführung des Brenners (1) umlaufen zu lassen, wobei der variable Durchsatz des Stroms des inerten Recyclegases (21) so gewählt wird, daß die Temperatur der Flamme in dem Ofen (2) zu einer Temperatur des Brenners führt, die mit der thermischen Widerstandsfähigkeit des Materials dieses Brenners vereinbar ist.

11. Syntheseeinheit zur Synthese von HCl und zur Reinigung nach Anspruch 10, wobei der Ofen (2) und der Absorber mit Wärmeaustauscher (3) in einer einzigen Apparateeinheit untergebracht sind, so daß eine halbintegrierte HCl-Syntheseeinheit gebildet wird.

12. Syntheseeinheit zur Synthese von HCl und zur Reinigung nach Anspruch 10, wobei der Ofen (2), der Absorber mit Wärmeaustauscher (3) und die Endkolonne (5) in einer einzigen Apparateeinheit untergebracht sind, so daß eine vollintegrierte HCl-Syntheseeinheit gebildet wird.

13. Syntheseeinheit zur Synthese von HCl und zur Reinigung nach einem der Ansprüche 10 bis 12, wobei das Mittel, mit dem der Fluß des inerten Recyclegases (21) in Umlauf gehalten wird, ein Gebläse mit einstellbarer Geschwindigkeit ist.

14. Syntheseeinheit zur Synthese von HCl und zur Reinigung nach einem der Ansprüche 10 bis 13, wobei der Fluß des inerten Recyclegases (21) an die Zusammensetzung und den Durchsatz der zu reinigenden Abgase so angepaßt ist, daß die Temperatur der Brennerflamme unterhalb einer eingestellten Temperatur liegt, die eine Funktion der Beschaffenheit des Materials ist, aus dem der Brenner gefertigt ist.

15. Syntheseeinheit zur Synthese von HCl und zur Reinigung nach Anspruch 14, wobei das Einstellen des Flusses des inerten Recyclegases (21) an die Zusammensetzung und den Durchsatz des Flusses ebenso wie das Bedienen der Syntheseeinheit automatisch durchgeführt werden, und zwar mit einem Computer, der den an einen beliebigen Durchsatz und eine beliebige Zusammensetzung eines sauerstoff- und chlorhaltigen Abgases angepaßten Fluß des inerten Gases so gespeichert hat oder so berechnen kann, daß die Temperatur der Brennerflamme unterhalb eines vorbestimmten eingestellten Werts gehalten wird.
